**Europäisches Patentamt**

**European Patent Office**

**Office européen des brevets**

(19)

(11) Veröffentlichungsnummer: **0 143 314**
**B1**

(12) **EUROPÄISCHE PATENTSCHRIFT**

(45) Veröffentlichungstag der Patentschrift:
30.03.88

(21) Anmeldenummer: 84112578.4

(22) Anmeldetag: 18.10.84

(51) Int. Cl.⁴: **F 16 D 25/12, F 16 D 25/11**

(54) Kühlflüssigkeitskreislauf für ein- und ausrückbare Kupplungen, insbesondere in Fahrzeugen.

(30) Priorität: 27.10.83 US 545981

(43) Veröffentlichungstag der Anmeldung:
05.06.85 Patentblatt 85/23

(45) Bekanntmachung des Hinweises auf die Patenterteilung:
30.03.88 Patentblatt 88/13

(84) Benannte Vertragsstaaten:
AT BE DE FR GB IT NL SE

(56) Entgegenhaltungen:
DE - A - 1 650 513
FR - A - 2 318 352
GB - A - 789 285
US - A - 2 158 440
US - A - 2 869 701
US - A - 3 351 169
US - A - 3 823 801

(73) Patentinhaber: DEERE & COMPANY, 1 John Deere Road, Moline Illinois 61265 (US)

(72) Erfinder: Wetrich, Peter Donald, 2427 Terrace Drive, Cedar Falls Iowa (US)

(74) Vertreter: Feldmann, Bernhard et al, DEERE & COMPANY European Office, Patent Department Steubenstrasse 36-42 Postfach 503, D-6800 Mannheim 1 (DE)

## Beschreibung

Die Erfindung bezieht sich auf einen Kühlflüssigkeitskreislauf für eine über ein Betätigungsglied ein- und ausrückbare hydraulisch beaufschlagbare Kupplung mit einer Kraftquelle für Kühlflüssigkeit und einer die Kraftquelle mit dem Kühlraum der Kupplung verbindenden ein pilot- und federgesteuertes zwischen zwei Stellungen verstellbares Steuerventil aufweisenden Leitung, wobei in der ersten Stellung des Steuerventils der Kühlraum mit der Kraftquelle verbunden und in der zweiten Stellung des Steuerventils die Verbindung zwischen Kühlraum und Kraftquelle unterbrochen oder der Kühlmittelzufluss zumindest reduziert ist.

Bei Fahrzeug- oder Zapfwellenkupplungen erfolgt das Einrücken der Kupplung durch Reibschluss, wodurch Hitze entsteht. Übermässige Hitze kann aber zu frühzeitigem Verschleiss und Ausfall der Kupplung führen. Daher ist man bestrebt, die Kupplung zu kühlen. Bei einem bekannten Kühlflüssigkeitskreislauf (US-A-2 158 440) wird die Kupplung hydraulisch ein- und ausgerückt, wozu ein doppelseitig beaufschlagbarer Zylinder vorgesehen ist, der je nach der Stellung des als Drehschieber ausgebildeten Steuerventils an einer seiner beiden Seiten mit Drucköl beaufschlagbar ist. Befindet sich die Kupplung in ihrem eingerückten Zustand, so wird ihr Inneres zusätzlich noch über das auf eine Seite des Zylinders wirkende Drucköl beaufschlagt, wodurch eine Kühlung und im gewissen Grad auch eine zusätzliche Schmierung der Kupplung erfolgt. Das Drucköl fliesst dann solange durch die Kupplung, wie die Kupplung eingerückt bleibt, das heisst auch dann, wenn die zu grosse Hitze bereits abgeleitet wurde. Hierdurch geht wertvolle Energie verloren.

Bei dem bekannten Kühl- bzw. Schmierflüssigkeitskreislauf (FR-A-2 318 352), von dem die Erfindung ausgeht, ist als Kraftquelle ein Akkumulator und eine Bremse vorgesehen, die beim Einrücken der Kupplung abgeschaltet wird und deren Druck dann zu dem einzigen Pilotraum geführt wird, der dann kurzzeitig das Steuerventil in seine Stellung verstellt, in der der Akkumulator mit dem Kühlraum der Kupplung verbunden ist. In diesem Zustand findet eine erhöhte Kühlung der Kupplung statt, die damit von dem Abschalten eines weiteren Verbrauchers abhängig ist.

Die mit der Erfindung zu lösende Aufgabe wird darin gesehen, dass das Steuerventil in Abhängigkeit von der Betätigung der Kupplung verstellbar ist.

Diese Aufgabe ist nach der Erfindung dadurch gelöst worden, dass das Steuerventil einen zweiten Pilotraum aufweist und an beiden Piloträumen der Hydraulikdruck der Kupplung anstehen kann und dem einen Pilotraum ein Verzögerungsventil vorgeschaltet ist, das eine Verzögerungskammer aufweist und zwischen zwei Stellungen verschiebbar ist, wobei in jeder Stellung des Verzögerungsventils der zugehörige Pilotraum mit einem unterschiedlichen Pilotdruck beaufschlagt wird.

Auf diese Weise ist sichergestellt, dass die Kühlung der Kupplung nicht vom Abschalten zusätzlicher Verbraucher abhängig ist, sondern erfolgt, sobald der Hydraulikdruck an der Kupplung sich ändert.

Hierbei werden die unterschiedlichen Pilotdrücke nach der Erfindung dann erzielt, wenn in der einen Stellung des Verzögerungsventils der zugehörige Pilotraum mit dem Sammelbehälter verbunden ist, während in der anderen Stellung des Verzögerungsventils in dem zugehörigen Pilotraum ein Druck ansteht, der auch in dem anderen Pilotraum ansteht. Sobald die Pilotdrücke identisch oder etwa identisch sind, kommt die am Steuerventil vorgesehene Feder zur Wirkung, über die das Steuerventil in seiner zweiten Stellung gehalten werden kann. Ist aber die eine Pilotkammer mit dem Sammelbehälter verbunden, so kann der Pilotdruck in der anderen Pilotkammer die Kraft der Feder überwinden und das Steuerventil in seine erste Stellung verschieben und dort so lange halten, bis sich in der ersten Pilotkammer wieder ein entsprechender Druck aufgebaut hat. Als Pilotdruck kann in einfacher Weise der Systemdruck herangezogen werden, das heisst irgendein im System herrschender Druck, wobei nur darauf zu achten ist, dass der in den Pilotkammern herrschende Druck nicht so unterschiedlich ist, dass eine Verschiebung des Steuerventils unmöglich wird.

Dadurch, dass nach der Erfindung die Verzögerungskammer des Verzögerungsventils in Abhängigkeit von der Betätigung der Kupplung mit dem Sammelbehälter verbindbar ist, hängt die Verstellung des Steuerventils in seine erste Stellung von der Betätigung der Kupplung ab.

Im einzelnen ist vorgesehen, die Piloträume des Steuerventils über je eine Leitung mit einem Stellventil zum Betätigen der Kupplung zu verbinden, das über eine Leitung mit der Verzögerungskammer des Verzögerungsventils in Verbindung steht, wobei in dieser Leitung ein zwischen zwei Stellungen gegen die Wirkung einer Feder verstellbares Pilotventil vorgesehen ist, dessen Pilotleitung an die Leitung angeschlossen ist und das gegen den Druck in der Pilotleitung über die Feder in seine zweite Stellung verstellbar ist, in der die Verzögerungskammer mit dem Sammelbehälter verbunden ist, wobei in einer die eine Pilotkammer mit dem Stellventil verbindenden Leitung das Verzögerungsventil vorgesehen ist, das bei druckbeaufschlagter Verzögerungskammer den zugehörigen Pilotraum mit dem Stellventil verbindet und bei mit dem Sammelbehälter verbundener Verzögerungskammer unter der Wirkung einer Feder in eine Stellung verschiebbar ist, in der der zugehörige Pilotraum mit dem Sammelbehälter verbunden ist. Auf diese Weise wird bei einer hydraulisch betätigbaren Kupplung in eingerücktem Zustand der Kupplung in der zur Verzögerungskammer führenden Leitung ein hoher Druck herrschen, der das Pilotventil in einer Stellung hält, in der die Verzögerungskammer mit dem Systemdruck beaufschlagt wird. Dadurch wird das Steuerventil in seiner zweiten Stellung gehalten. Sobald aber die Kupplung ausgerückt wird, wird der Systemdruck abfallen, wodurch das Pilotventil sich infolge der Feder in seine zweite Stellung verschiebt, in der die Verzögerungskammer mit dem Sammelbehälter in Verbindung steht. Hierdurch verschiebt sich das Verzögerungsventil in seine die eine Pilotkammer mit dem Sammelbehälter verbindende Stellung. Da aber der Pilotdruck in der anderen Pilotkammer dem verminderten Systemdruck entspricht, wird die Feder am Steuerventil dieses in seiner zweiten Stellung halten, so dass auch bei ausgerückter Kupplung kein Kühlmittelzufluss zur Pumpe erfolgt.

Nach der Erfindung sind ferner zwischen Verzögerungskammer und Pilotventil eine Blende und eine die Blende überbrückende Leitung vorgesehen. Damit wird erreicht, dass beim Einrükken der Kupplung, also zu einem Zeitpunkt, in dem die grösste Hitzeentwicklung entsteht, die eine Pilotkammer sofort wieder mit dem vollen Systemdruck beaufschlagt wird, da beim Einrükken der Systemdruck wieder ansteigt. Sobald an der einen Pilotkammer der volle Systemdruck ansteht, verschiebt sich das Steuerventil in seine erste Stellung gegen die Wirkung der Feder, in der Kühlflüssigkeit von der Kraftquelle in die Kupplung gelangt. Zu diesem Zeitpunkt ist die Verzögerungskammer infolge der Blende noch nicht aufgeladen, so dass die andere Pilotkammer noch mit dem Sammelbehälter in Verbindung steht. Das Aufladen der Verzögerungskammer dauert einige Sekunden, wonach sich dann das Steuerventil wieder in seine zweite Stellung verstellt, in der keine Kühlflüssigkeit oder nur ein reduzierter Strom in die Kupplung gelangt. Die die Blende überbrückende Leitung trägt dazu bei, dass die Verzögerungskammer schnell entladen werden kann.

Um zu erreichen, dass die Verzögerungskammer nur mit einem angemessenen Druck aufgeladen wird, ist nach der Erfindung vorgesehen, dass zwischen dem Pilotventil und der Blende ein Begrenzungsventil vorgesehen ist, das über den Druck vor der Blende gegen die Wirkung einer Feder in eine Sperrstellung verschiebbar ist, wobei die Kraft der Feder grösser ist als die Kraft der Feder am Verzögerungsventil, wobei die Feder am Begrenzungsventil und die Feder am Verzögerungsventil aufeinander abzustimmen sind.

Ein gedrosselter Zufluss in das Innere der Kupplung – auch bei eingerückter Kupplung – kann unter gewissen Einsatzverhältnissen wünschenswert sein, weshalb nach der Erfindung ausserdem vorgesehen werden kann, dass in der einen Stellung des Steuerventils eine Verbindung der Kraftquelle mit dem Sammelbehälter und über eine Blende mit einem Kühlraum der Kupplung besteht und in der anderen Stellung des Steuerventils die Verbindung der Kraftquelle mit dem Sammelbehälter unterbunden ist.

Der erfindungsgemässe Kühlflüssigkeitskreislauf lässt sich auch zur Kühlung mehrerer Kupplungen vorteilhaft einsetzen, wenn das Steuerventil mit einem Kühlraum für eine weitere gegebenenfalls als Zapfwellkupplung ausgebildeten Kupplung verbunden ist. In weiterer Ausgestaltung der Ausführung mit mehreren zu kühlenden Kupplungen kann in der Verbindung zwischen Steuerventil und dem Kühlraum für die weitere Kupplung ein Schieberventil vorgesehen sein, das mindestens einen Eingang und zwei Auslässe, von denen der erste Eingang an das Steuerventil, der erste Auslass an die Kühlräume beider Kupplungen und der zweite Auslass an den Sammelbehälter angeschlossen sind, sowie einen zwischen zwei Stellungen verschiebbaren Ventilschieber aufweist, der in seiner ersten Stellung den ersten Auslass mit dem ersten Eingang verbindet und den zweiten Auslass blockiert und der in seiner zweiten Stellung den ersten Auslass blockiert und den ersten Eingang mit dem zweiten Auslass verbindet, wobei der Ventilschieber in seine zweite Stellung über eine Feder und in seine erste Stellung über den Systemdruck verstellbar ist und ein weiteres Stellventil zum Betätigen der weiteren Kupplung vorgesehen ist, das an einen weiteren Ventilschieber angeschlossen ist, über den der Ventilschieber des Schieberventils in seine erste Stellung verstellbar ist. Auch auf diese Weise wird die zusätzliche Kupplung bei ihrem Einschalten kurzfristig mit Kühlflüssigkeit beaufschlagt. Andererseits ist es aber auch möglich, dass die vom Steuerventil zum Sammelbehälter führende Leitung an ein Absperrventil angeschlossen ist, das über einen ersten Pilotdruck und einen weiteren Pilotdruck zusammen mit der Kraft einer Feder zwischen zwei Stellungen verschiebbar ist, in denen die Verbindung der zum Sammelbehälter führenden Leitung mit einer vom Steuerventil zu den Kühlräumen führenden Leitung hergestellt bzw. unterbrochen ist. Auch bei dieser Variante sind die erfindungsgemässen Vorteile, wie sie vorstehend für die Kühlung der einzigen Kupplung ausgeführt würden, in gleicher Weise erreichbar. Weitere Merkmale dieser Variante sind Gegenstand der Ansprüche 15 bis 22, für die die Ausführungen zu den Ansprüchen 2 bis 4 und 5 bis 8 entsprechend gelten, allerdings unter der Voraussetzung, dass die zweite Kupplung sich normalerweise in einem ausgerückten Zustand befindet.

In der Zeichnung sind zwei nachfolgend näher erläuterte Ausführungsbeispiele nach der Erfindung dargestellt. Es zeigt:

Fig. 1 einen Kühlflüssigkeitskreislauf für zwei Kupplungen;

Fig. 2 einen weiteren Kühlflüssigkeitskreislauf für zwei Kupplungen.

Ein in der Zeichnung der Einfachheit halber nicht dargestellter Ackerschlepper kann mit einer hydraulisch betätigbaren Kupplung 10 mit einem Kühlraum 12 und einer hydraulisch betätigbaren Zapfwellenkupplung 14 mit einem Kühlraum 16 ausgerüstet werden. Hierbei wird die Kupplung 10, die zum Trennen und Verbinden einer Verbrennungskraftmaschine und eines Getriebes dient, von einem Stellventil 18 aus, das über ein Pedal 19 betätigt werden kann, über eine Leitung 21 mit Druckflüssigkeit versorgt. Über ein durch einen Hebel betätigbares Stellventil 20 kann die Zapfwellenkupplung 14 über eine Leitung 23 ein- und ausgerückt werden, die zum Antreiben einer Zapfwelle dient, über die an den Ackerschlepper angeschlossene Aggregate oder Geräte antreibbar sind. Die Zapfwellenkupplung kann auch durch eine andere Kupplung ersetzt werden. Die Fahrkupplung und die weitere Kupplung können auch bei anderen Antriebszügen als in Fahrzeugen oder Ackerschleppern eingesetzt werden. Die Kupplungen bestehen in der Regel aus Platten und Scheiben, die beim Einrücken durch Reibschluss miteinander verbunden werden, so dass insbesondere beim Einrückvorgang eine grosse Hitzeentwicklung entsteht, die durch Kühlung abgebaut werden kann. Die entsprechende Kühlflüssigkeit, die auch zusätzlich schmieren kann, wird von einer Kraftquelle 22 ausgeliefert.

Ein Kontrollkreislauf 30 steuert den Zufluss von Kühlflüssigkeit von der Kraftquelle 22 zu den Kühlräumen 12 und 16, die auch noch einen eigenen Kreislauf aufweisen können, in Abhängigkeit von der Stellung der Stellventile 18 und 20 und damit in Abhängigkeit von dem Systemdruck. Der Kontrollkreislauf muss nicht notwendigerweise zwei Kupplungen aufweisen, weshalb er grundsätzlich in zwei Teilen aufgebaut ist, die beide für sich die vorteilhafte Kühlung, wie sie nachfolgend noch im einzelnen beschrieben wird, ermöglichen. Zu dem ersten Teil des Kontrollkreislaufes 30 gehören ein zwei Stellungen einnehmendes, druckbeaufschlagbares Pilotventil 32, ein ebenfalls zwischen zwei Stellungen über einen Pilotdruck und eine Feder verschiebbares Begrenzungsventil 34 mit 5 psi, eine Blende 36, ein Verzögerungsventil 38 und ein Steuerventil 40 mit zwei Piloträumen 46 und 47, über das der Zulauf von Kühlflüssigkeit zu einer oder beiden Kupplungen von der Kraftquelle 22 aus gestattet oder unterbunden werden kann.

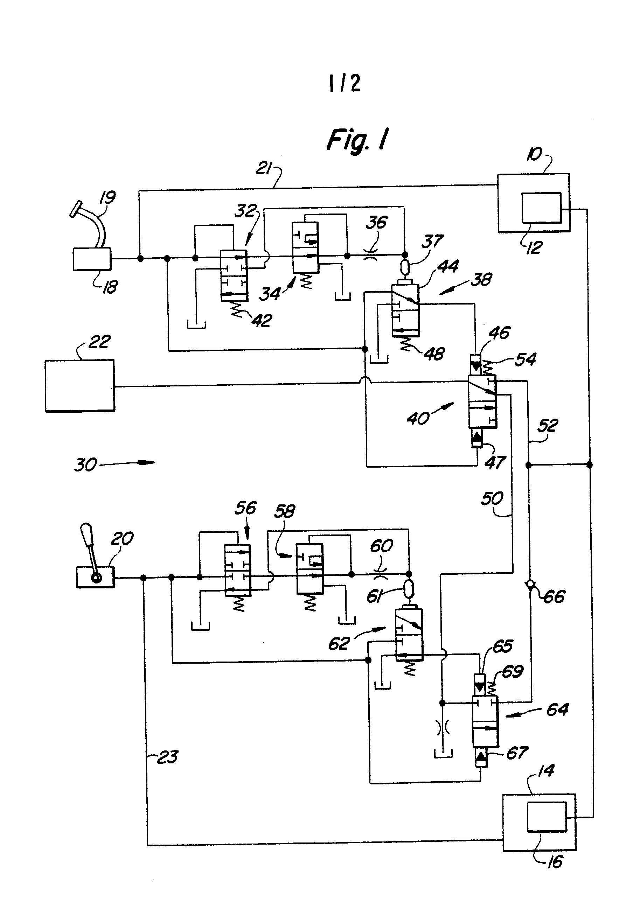

In seiner ersten in der Fig. 1 dargestellten Position verbindet das Pilotventil 32 das Stellventil 18 mit einer am Verzögerungsventil 38 vorgesehenen Verzögerungskammer 37 über das Begrenzungsventil 34 und die Blende 36, da der Systemdruck über eine Pilotleitung auf die eine Seite des Pilotventils wirkt. Der Pilotdruck wirkt gegen eine Feder 42, so dass beim Absinken des Systemdrucks die Feder 42 das Pilotventil 32 in seine zweite Stellung verschieben kann, in der die vorgenannte Verbindung unterbrochen und eine die Blende 36 und das Begrenzungsventil 34 überbrückende, an die Verzögerungskammer 37 angeschlossene Leitung mit einem Sammelbehälter verbunden ist. In der ersten Stellung des Pilotventils 32 ist diese Verbindung unterbrochen. Die Feder 42 kann das Pilotventil 32 verstellen, wenn der Systemdruck auf unter 150 psi abfällt.

Das Verzögerungsventil 38 ist mit einem Ventilschieber 44 ausgerüstet, der ebenfalls zwei Stellungen einnehmen kann. In der ersten in Fig. 1 dargestellten Position des Ventilschiebers 44 ist der Pilotraum 46 des Steuerventils 40 an den Systemdruck angeschlossen, da hierzu eine Zweigleitung vor dem Pilotventil 32 und hinter dem Stellventil 18 von der Leitung 21 abzweigt. In der zweiten Stellung des Ventilschiebers 44 ist diese Verbindung unterbrochen und der Pilotraum 47 des Steuerventils 40 ist ständig an den Systemdruck angeschlossen. Über eine Feder 48 wird das Verzögerungsventil 38 in seine zweite Stellung verschoben, wenn der Druck in der Verzögerungskammer 37 nicht mehr als 2 psi beträgt. Bei einem Druck von mehr als 2 psi in der Verzögerungskammer 37 wird das Verzögerungsventil 38 wieder in seine erste Stellung zurückgeführt. Der Zeitpunkt, zu dem dies erfolgt, hängt davon ab, wie schnell sich über die Blende 37 ein solcher Druck aufbauen kann. Das Begrenzungsventil 34 ist mit dem Verzögerungsventil 38 abgestimmt und verhindert, dass sich in der Verzögerungskammer 37 ein ungewollt hoher Druck aufbauen kann. Es ist deshalb gegen die Wirkung einer Feder pilotgesteuert, wobei seine Pilotleitung an der Verbindung zwischen Begrenzungsventil 34 und Blende 36 angreift.

Das Steuerventil 40 kann ebenfalls zwei Stellungen einnehmen. In seiner ersten Stellung ist die Kraftquelle 22 für die Kühlflüssigkeit über eine Leitung 52 mit den Kühlräumen 12 und 16 verbunden, während in seiner zweiten in Fig. 1 der Zeichnung wiedergegebenen Position diese Verbindung unterbrochen ist und stattdessen die Kraftquelle 22 mit einer Leitung 50 in Verbindung steht. Das Steuerventil 40 wird normalerweise über eine Feder 54 in seiner zweiten Stellung gehalten. Übersteigt aber der Druck in dem Pilotraum 47 den Druck in dem Pilotraum 46 um vorzugsweise 15 psi oder mehr, dann wird sich das Steuerventil in seine erste Stellung verschieben. Die Leitung 50 ist mit dem Sammelbehälter verbunden und die Leitung 52 bräuchte nur an den Kühlraum 12 angeschlossen zu sein, damit das System bei nur einer Kupplung die gewünschte Funktion erfüllt.

Der zweite Teil des Kontrollkreislaufs 30 weist ein Pilotventil 56, ein Begrenzungsventil 58, eine Blende 60, eine Verzögerungskammer 61 an einem Verzögerungsventil 62 sowie ein Absperrventil 64 auf. Hierbei entsprechen Pilotventil 56, Begrenzungsventil 62 mit Verzögerungskammer 61 in ihrer Anordnung, Funktion und ihrem Aufbau den entsprechenden Teilen im ersten Teil des Kontrollkreislaufes. Nur das Absperrventil 64 weicht geringfügig von dem Steuerventil 40 ab, da es nur eine Ausgangsverbindung aufweist. Seine Piloträume sind mit 65 und 67 und die Feder mit 69 bezeichnet. Das Absperrventil 64 ist an einer Seite vor dem Sammelbehälter und einer Blende an die Leitung 50 und an seiner anderen Seite an die Leitung 52 angeschlossen und kann zwei Positionen einnehmen, wobei in der ersten Stellung die Verbindung zwischen den Leitungen 50 und 52 unterbrochen und in der zweiten Stellung die Leitungen 50 und 52 über das Absperrventil 64 miteinander verbunden sind. In dem Anschluss zur Leitung 52 ist noch ein Rückschlagventil 66 vorgesehen und das Verzögerungsventil 62 sowie das Pilotventil 56 sind in ihren zweiten Stellungen dargestellt.

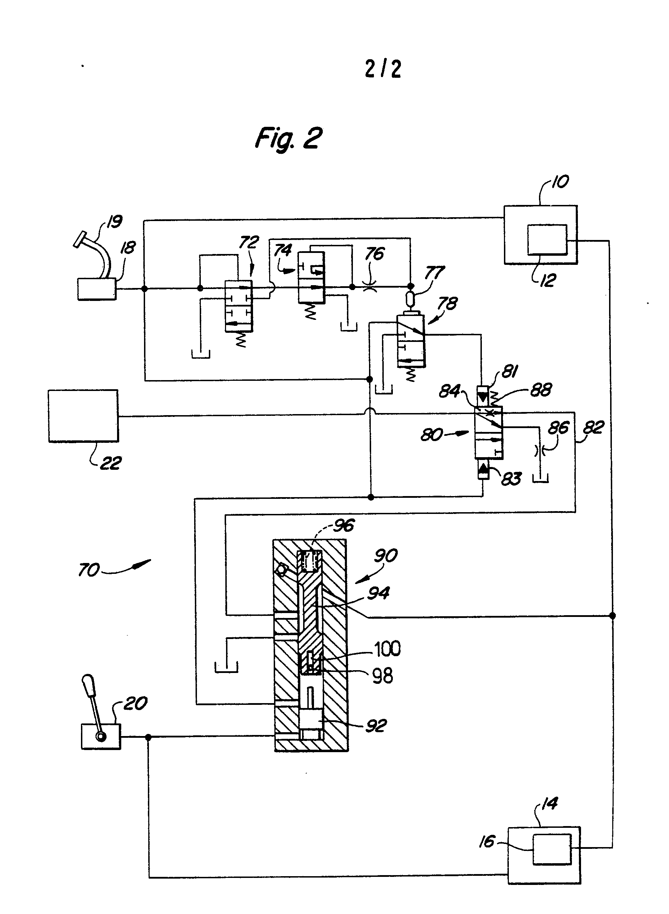

In dem in Fig. 2 dargestellten Ausführungsbeispiel entspricht der erste Teil des hier mit 70 bezeichneten Kontrollkreislaufs demjenigen von Fig. 1. Er weist demnach ein Pilotventil 72, ein Begrenzungsventil 74, eine Blende 76, eine Verzögerungskammer 77 und ein Verzögerungsventil 78 auf. Das Steuerventil 80 weicht insoweit von dem Steuerventil 40 nach Fig. 1 ab, als dass noch eine zweite Ausgangsverbindung über eine Blende 84 vorgesehen ist. Seine Piloträume sind mit 81 und 83 und seine Feder ist mit 88 bezeichnet, wobei in der zum Sumpf führenden Leitung die Blende mit 86 bezeichnet ist. In seiner ersten Position ist die Kraftquelle 22 für das Kühlmittel mit einer Leitung 82 verbunden, während in seiner zweiten in Fig. 2 wiedergegebenen Stellung die Kraftquelle 22 mit dem Sammelbehälter über die Blende 86 und über die Blende 84 mit der Leitung 82 verbunden ist. Über die Feder 88 wird das Steuerventil in seiner zweiten Stellung gehalten, solange der Druck im Pilotraum 83 den Druck im Pilotraum nicht um 15 psi oder mehr übersteigt.

Der zweite Teil des Kontrollkreislaufs 70 ist im wesentlichen aus einem Schieberventil 90 mit einem Ventilschieber 92 und einem Ventilschieber 94 gebildet. Die Leitung 82 ist mit einem ersten Eingang im Schieberventil verbunden und ein erster Ausgang führt zu den Kühlräumen 12 und 16. Ein zweiter Ausgang ist an den Sammelbehälter angeschlossen. Der Ventilschieber 94 steht unter der Wirkung einer an seinem einen Ende vorgesehenen Feder 96 und kann zwei Stellungen einnehmen, in denen einmal in der zweiten in Fig. 2 dargestellten Position der erste Eingang mit dem ersten Auslass verbunden und der zweite Auslass blockiert ist und zum anderen in der ersten Position der erste Auslass blockiert und der erste Eingang mit dem zweiten Auslass verbunden ist. Über einen zweiten Eingang, über den das der Feder 96 abgelegene Ende des Ventilschiebers 94 druckbeaufschlagbar ist, ist das Schieberventil an die zum Pilotraum 83 führende und vom Stellventil 18 kommende Leitung angeschlossen, während ein dritter Eingang eine Verbindung zu dem Stellventil 20 herstellt. Der Ventilschieber 92, der an seinen beiden Stirnenden mit Stösseln versehen ist, kann über den zweiten und dritten Eingang druckbeaufschlagt werden, so dass an seinen Stirnenden der Systemdruck des Stellventils 18 und der des Stellventils 20 anliegen kann. Die Abwärtsbewegung des Ventilschiebers wird durch einen ortsfesten Stift 98 begrenzt, der in einem Schlitz 100 des Ventilschiebers eingreift.

Wirkungsweise

Bei eingerückter Kupplung 10 ist der vom Stellventil 18 kommende Systemdruck normalerweise hoch, so dass bei der Ausführung nach Fig. 1 das Pilotventil 32 und anfangs das Begrenzungsventil 34, das Verzögerungsventil 38 und das Steuerventil 40 sich in der Regel in den dort wiedergegebenen Stellungen befinden. Das Begrenzungsventil 34, über das die Füllgeschwindigkeit der Verzögerungskammer 37 oder deren Entleerung verlangsamt werden kann, ist dabei derart ausgelegt, dass es bei eingerückter Kupplung 10 immer einen Druck in der Verzögerungskammer 37 aufrecht erhält, der ausreicht, um das Verzögerungsventil 38 in seiner in Fig. 1 gezeigten Stellung zu halten. Im einzelnen wird dies durch das Verhältnis der Kräfte der Feder am Begrenzungsventil 34 und der Feder 48 am Verzögerungsventil 38 erreicht, wobei der Druck in der Verzögerungskammer erheblich niedriger ist als der Systemdruck, jedoch höher als 2 psi. Damit ist die Verbindung der Kraftquelle 22 zu den Kühlräumen 12 und 16 durch das Steuerventil 40 unterbrochen und eine Verbindung der Kraftquelle 22 mit der Leitung 50 hergestellt. Andererseits ist der normalerweise von dem Stellventil 20 kommende Systemdruck gering, da die Zapfwellenkupplung 14 die meiste Zeit nicht eingerückt ist. In einem solchen Zustand befinden sich das Pilotventil 56, das Begrenzungsventil 58, das Verzögerungsventil 62 und das Absperrventil 64 in den eingezeichneten Stellungen. Damit befindet sich auch das Absperrventil 64 in seiner Schliessstellung, in der keine Kühlflüssigkeit zu den Kupplungen 10 und 14 gelangen kann.

Wird nun das Pedal 19 zum Ausrücken der Kupplung 10 betätigt, so wird der vom Stellventil 18 kommende Systemdruck abfallen, wodurch die Feder 42 das Pilotventil 32 in seine zweite Stellung verschiebt, in der die Verzögerungskammer 37 mit dem Sammelbehälter verbunden ist. Dadurch baut sich der Druck in der Verzögerungskammer 37 momentan ab und die Feder 48 kann das Verzögerungsventil 38 in seine zweite Position verstellen, in der der Pilotraum 46 des Steuerventils 40 ebenfalls mit dem Sammelbehälter verbunden ist. Gleichzeitig wird das Begrenzungsventil 34 über seine Feder wieder in die in Fig. 1 gezeigte Stellung zurückgeführt, da sich auch der Pilotdruck abbaut. Da aber nun an dem anderen Pilotraum 47 bei ausgerückter Kupplung 10 nur der niedrige Systemdruck ansteht, kann die Feder 54 das Steuerventil in der dargestellten zweiten Position halten, in der ein Kühlmittelflüssigkeitsfluss zu den Kupplungen unterbunden ist.

Wird nun zum Wiedereinrücken der Kupplung 10 das Pedal 19 entlastet, so steigt der Systemdruck unmittelbar an, so dass an dem Pilotraum 47 des Steuerventils 40 auch sofort hoher Druck ansteht, der von dem Stellventil 18 kommt. Zu diesem Zeitpunkt ist aber der andere Pilotraum 46 des Steuerventils 40 noch mit dem Sammelbehälter über das Verzögerungsventil 38 verbunden und zwar solange, bis sich über das Pilotventil 32, das Begrenzungsventil 34 und die Blende 36 in der Verzögerungskammer 37 wieder ein zum Verstellen des Verzögerungsventils 38 ausreichender Druck aufgebaut hat. Unter diesen Bedingungen, das heisst während des Einrückens der Kupplung 10, herrscht in dem Pilotraum 47 ein Druck, der die Kraft der Feder 54 und einen eventuell vorhandenen Rücklaufdruck in den Pilotraum 46 überwindet und das Steuerventil 40 in seine erste Stellung verschiebt, in der die Kraftquelle 22 für das Kühlmittel mit der Leitung 52 und damit mit den Kühlräumen 12 und 16 der Kupplungen 10 und 14 verbunden ist. Somit findet beim Einrücken der Kupplung, bei dem die grösste Hitzeentwicklung entsteht, eine Kühlung und gegebenenfalls eine Schmierung zumindest der Kupplung 10 statt. Zur gleichen Zeit wird sich aber in der Verzögerungskammer 37 wieder ein Druck aufbauen, der nach etwa 20 bis 30 Sekunden so gross ist, dass das Verzögerungsventil 38 gegen die Wirkung der Feder 48 wieder in seine erste in Fig. 1 wiedergegebene Stellung verschoben wird, in der der Pilotraum 46 ebenfalls mit dem hohen Druck von dem Stellventil 18 beaufschlagt wird. Damit steht an den Piloträumen 46 und 47 der gleiche Druck an, und die Feder 54 kann das Steuerventil 40 in seine zweite in Fig. 1 gezeigte Stellung zurückschieben, in der die Kühlmittelzufuhr zu den Kupplungen 10 und 14 blockiert ist. Zusammenfassend kann damit festgestellt werden, dass bei ausgerückter Kupplung 10 der Kühlflüssigkeitsfluss zur Kupplung unterbrochen, aber beim Einrücken der Kupplung für eine kurze Zeitspanne nicht unterbrochen ist, um nachfolgend wieder blockiert zu werden, bis ein neues Betätigen der Kupplung erfolgt.

Das Pilotventil 56, das Begrenzungsventil 58, das Verzögerungsventil 62 und das Absperrventil 64 arbeiten in ähnlicher Weise in Abhängigkeit von der Betätigung des Stellventils 20 mit der Ausnahme, dass der Systemdruck bei ausgerückter Zapfwellenkupplung 14 gering ist.

Beim Einrücken der Zapfwellenkupplung 14 steigt der von dem Stellventil 20 kommende Druck an und wirkt damit unmittelbar auf den Pilotraum 67 des Absperrventils 64, wodurch dieses sofort aus seiner in Fig. 1 wiedergegebenen Stellung in seine zweite Stellung verschoben wird, in der die Kühlmittelflüssigkeit aus der Leitung 50 zu den Kühlräumen 12 und 16 der Kupplungen 10 und 14 geleitet wird, und zwar über das Rückschlagventil 66. Gleichzeitig wurde das Pilotventil 56 aus seiner in Fig. 1 gezeigten Stellung über den Pilotdruck, der dem Systemdruck entspricht, in seine untere Stellung verstellt, so dass in der Verzögerungskammer 61 über das Begrenzungsventil 58 und die Blende 60 zeitlich verzögert ein Druck aufgebaut wird, der nach etwa 20 bis 30 Sekunden gross genug ist, um das Verzögerungsventil 62 aus seiner in Fig. 1 gezeigten Stellung in seine zweite Position zu verschieben, in der auch der Pilotraum 65 mit dem Stellventil 20 verbunden ist, so dass auch im Pilotraum 65 der Systemdruck ansteht. Dadurch kann die Feder 69 das Absperrventil 64 wieder in seine in Fig. 1 gezeigte Position verstellen, in der der Kühlmittelzufluss zu den Kupplungen 10 und 14 unterbrochen ist. Damit haben beide Teile des Kontrollkreislaufs 30 gemeinsam, dass beim niedrigen und hohen Systemdruck eine Kühlmittelzufuhr zu den Kupplungen unterbrochen ist, aber beim Wechsel vom niedrigen zum hohen Systemdruck kurzzeitig möglich ist.

Auch bei der Ausführungsform nach Fig. 2 ist der Systemdruck vom Stellventil 18 normalerweise hoch und der von dem Stellventil 20 für die Zapfwellenkupplung normalerweise niedrig. Diese Systemdrücke halten damit in der Normalstellung das Pilotventil 72, anfänglich das Begrenzungsventil 74, das Verzögerungsventil 78, das Steuerventil 80 und das Schieberventil 90 in den in Fig. 2 wiedergegebenen Positionen, so dass die Kraftquelle 22 für das Kühlmittel über die Blende 84 im Steuerventil 80 und das Schieberventil 90 mit den Kühlräumen 12 und 16 der Kupplungen 10 und 14 verbunden ist.

Beim Ausrücken der Kupplung 10 fällt der Systemdruck ab, so dass sich das Pilotventil 72 derart aufgrund der Feder verstellt, dass die Verzögerungskammer 77 mit dem Sammelbehälter verbunden wird. Dadurch wiederum verstellt sich das Verzögerungsventil 78 und verbindet den Pilotraum 81 mit dem Sammelbehälter. Da jedoch auch der an dem Pilotraum 83 anstehende Druck reduziert ist, kann die Feder 88 das Steuerventil in seiner in Fig. 2 gezeigten Stellung halten, in der nur ein reduzierter Kühlmittelfluss in die Leitung 82 erfolgt. Wäre die Leitung 82 unter Ausschaltung des Schieberventils 90, was möglich ist, wenn eine Zapfwellenkupplung nicht vorhanden wäre oder keine oder eine andere Kühlung derselben gewünscht wird, direkt mit dem Kühlraum 12 der Kupplung 10 verbunden, so würde bei niedrigem Systemdruck ein reduzierter Kühlmittelfluss in die Kupplung gelangen, was unter gewissen Einsatzverhältnissen auch sinnvoll erscheinen kann. Da aber bei der in Fig. 2 gezeigten Ausführung die Leitung 82 an das Schieberventil 90 angeschlossen ist, an dem gleichzeitig der niedrige Systemdruck infolge der Verbindung des zweiten Eingangs mit dem Stellventil 18 ansteht, wird die Feder 96 den Ventilschieber 94 in eine Stellung verschieben, in der der erste Ausgang blockiert und der erste Eingang und der zweite Ausgang miteinander verbunden sind. Dadurch wiederum ist die Leitung 82 mit dem Sammelbehälter verbunden und keine Kühlmittelflüssigkeit kann zu den Kupplungen gelangen.

Bei Entlasten des Pedals 19 zum Einrücken der Kupplung 10 steigt der Systemdruck und damit der Druck in der Pilotkammer 83 und an der Unterseite des Ventilschiebers 94 sofort an, während infolge des Verzögerungsventils 78 der Druck im Pilotraum 81 nicht ausreicht, um ein Verschieben des Steuerventils 80 in seine erste Stellung zu verhindern, in der der gesamte Kühlmittelstrom in die Leitung 82 gelangt. Aufgrund des über den zweiten Eingang an der Unterseite des Ventilschiebers 94 anstehenden hohen Systemdruckes verstellt sich dieser wieder in seine in Fig. 2 wiedergegebene Stellung, in der die Leitung 82 mit den Kühlräumen 12 und 16 der Kupplungen 10 und 14 verbunden ist. Somit gelangt der gesamte Kühlmittelfluss ungedrosselt zu den Kupplungen. Wie bei der Ausführung nach Fig. 1 wird nach etwa 20 bis 30 Sekunden das Verzögerungsventil 78 ansprechen, wodurch der Systemdruck auch wieder an dem Pilotraum 81 ansteht und das Steuerventil 80 über die Feder 88 in seine in Fig. 2 wiedergegebene Stellung verstellt wird, so dass dann im eingerückten Zustand der Kupplung 10 ein reduzierter Kühlflüssigkeitsstrom zu den Kupplungen 10 und 14 gelangt.

Befindet sich der Ventilschieber 94 in seiner unteren Stellung, in der der erste Ausgang blockiert ist und wird das Stellventil 20 zum Einrücken der Zapfwellenkupplung 14 betätigt, so wird der Systemdruck ansteigen und die Ventilschieber 92 und 94 mit Bezug auf Fig. 2 nach oben verstellen, so dass eine Verbindung zwischen der Leitung 82 und den Kühlräumen 12 und 16 der Kupplungen 12 und 14 hergestellt ist.

**Patentansprüche**

1. Kühlflüssigkeitskreislauf für eine über ein Betätigungsglied (18, 19) ein- und ausrückbare hydraulisch beaufschlagbare Kupplung (10) mit einer Kraftquelle (22) für Kühlflüssigkeit und einer die Kraftquelle mit dem Kühlraum (12, 16) der Kupplung verbindenden ein pilot- und federgesteuertes, zwischen zwei Stellungen verstellbares Steuerventil (40, 80) aufweisenden Leitung, wobei in der ersten Stellung des Steuerventils (40, 80) der Kühlraum (12, 16) mit der Kraftquelle (22) verbunden und in der zweiten Stellung des Steuerventils (40, 80) die Verbindung zwischen Kühlraum (12, 16) und Kraftquelle (22) unterbrochen oder der Kühlmittelzufluss zumindest reduziert ist, dadurch gekennzeichnet, dass das Steuerventil (40, 80) einen zweiten Pilotraum (47, 83) aufweist und an beiden Piloträumen (47, 83 und 46, 81) der Hydraulikdruck der Kupplung (10) anstehen kann, und dem einen Pilotraum (46, 81) ein Verzögerungsventil (38, 78) vorgeschaltet ist, das eine Verzögerungskammer (37, 77) aufweist und zwischen zwei Stellungen verschiebbar ist, wobei in jeder Stellung des Verzögerungsventils (38, 78) der zugehörige Pilotraum (46, 81) mit einem unterschiedlichen Pilotdruck beaufschlagt wird.

2. Kühlflüssigkeitskreislauf nach Anspruch 1, dadurch gekennzeichnet, dass in der einen Stellung des Verzögerungsventils (38, 78) der zugehörige Pilotraum (46, 81) mit dem Sammelbehälter verbunden ist, während in der anderen Stellung des Verzögerungsventils (38, 78) in dem zugehörigen Pilotraum (46, 81) ein Druck ansteht, der auch in dem anderen Pilotraum (47, 48) ansteht.

3. Kühlflüssigkeitskreislauf nach Anspruch 2, dadurch gekennzeichnet, dass der in der anderen Stellung des Verzögerungsventils (38, 78) in den Piloträumen (46, 81 und 47, 83) anstehende Druck dem Systemdruck entspricht.

4. Kühlflüssigkeitskreislauf nach einem oder mehreren der vorherigen Ansprüche, dadurch gekennzeichnet, dass die Verzögerungskammer (37, 77) des Verzögerungsventils (38, 78) in Abhängigkeit von der Betätigung der Kupplung (10) mit einem Sammelbehälter verbindbar ist.

5. Kühlflüssigkeitskreislauf nach einem oder mehreren der vorherigen Ansprüche, dadurch gekennzeichnet, dass die Piloträume (46, 47 und 81, 83) des Steuerventils (40, 80) über je eine Leitung mit einem Stellventil (18) zum Betätigen der Kupplung (10) verbunden sind, das über eine Leitung mit der Verzögerungskammer (37, 77) des Verzögerungsventils (38, 78) in Verbindung steht, wobei in dieser Leitung ein zwischen zwei Stellungen gegen die Wirkung einer Feder (42) verstellbares Pilotventil (32, 72) vorgesehen ist, dessen Pilotleitung an die Leitung angeschlossen ist und das gegen den Druck in der Pilotleitung über die Feder in seine zweite Stellung verstellbar ist, in der die Verzögerungskammer (37, 77) mit dem Sammelbehälter verbunden ist.

6. Kühlflüssigkeitskreislauf nach einem oder mehreren der vorherigen Ansprüche, dadurch gekennzeichnet, dass in einer die eine Pilotkammer (46, 81) mit dem Stellventil (18) verbindenden Leitung das Verzögerungsventil (38, 80) vorgesehen ist, das bei druckbeaufschlagter Verzögerungskammer (37, 77) den zugehörigen Pilotraum (46, 81) mit dem Stellventil (18) verbindet und bei mit dem Sammelbehälter verbundener Verzögerungskammer (37, 81) unter der Wirkung einer Feder (48) in eine Stellung verschiebbar ist, in der der zugehörige Pilotraum (46, 81) mit dem Sammelbehälter verbunden ist.

7. Kühlflüssigkeitskreislauf nach einem oder mehreren der vorherigen Ansprüche, dadurch gekennzeichnet, dass zwischen Verzögerungskammer (37, 77) und Pilotventil (32, 72) eine Blende (36, 76) und eine die Blende (36, 76) überbrückende Leitung vorgesehen sind.

8. Kühlflüssigkeitskreislauf nach Anspruch 7, dadurch gekennzeichnet, dass zwischen dem Pilotventil (32, 72) und der Blende (36, 76) ein Begrenzungsventil (34, 74) vorgesehen ist, das über dem Druck vor der Blende (36) gegen die Wirkung einer Feder in eine Sperrstellung verschiebbar ist, wobei die Kraft der Feder grösser ist als die Kraft der Feder (48) am Verzögerungsventil (38, 78).

9. Kühlflüssigkeitskreislauf nach einem oder mehreren der vorherigen Ansprüche, dadurch gekennzeichnet, dass in der einen Stellung des Steuerventils (80) eine Verbindung der Kraftquelle (22) mit dem Sammelbehälter und über eine Blende (84) mit einem Kühlraum (12) der Kupplung (10) besteht und in der anderen Stellung des Steuerventils die Verbindung der Kraftquelle mit dem Sammelbehälter unterbunden ist.

10. Kühlflüssigkeitskreislauf nach einem oder mehreren der vorherigen Ansprüche, dadurch gekennzeichnet, dass das Steuerventil (40, 80) mit einem Kühlraum (16) für eine weitere, gegebenenfalls als Zapfwellkupplung ausgebildeten Kupplung (14) verbunden ist.

11. Kühlflüssigkeitskreislauf nach Anspruch 10, dadurch gekennzeichnet, dass in der Verbindung zwischen Steuerventil (80) und dem Kühlraum (16) für die weitere Kupplung (14) ein Schieberventil (90) vorgesehen ist, das mindestens einen Eingang und zwei Auslässe, von denen der erste Eingang an das Steuerventil (80), der erste Auslass an die Kühlräume (12, 14) beider Kupplungen (10, 14) und der zweite Auslass an den Sammelbehälter angeschlossen sind, sowie einen zwischen zwei Stellungen verschiebbaren Ventilschieber (94) aufweist, der in seiner ersten Stellung den ersten Auslass mit dem ersten Einlass verbindet und den zweiten Auslass blockiert und der in seiner zweiten Stellung den ersten Auslass blockiert und den ersten Einlass mit dem zweiten Auslass verbindet.

12. Kühlflüssigkeitskreislauf nach Anspruch 11, dadurch gekennzeichnet, dass der Ventilschieber (94) in seine zweite Stellung über eine Feder (96) und in seine erste Stellung über den Systemdruck verstellbar ist.

13. Kühlflüssigkeitskreislauf nach Anspruch 11, dadurch gekennzeichnet, dass ein weiteres Stellventil (20) zum Betätigen der weiteren Kupplung (14) vorgesehen ist, das an einen weiteren Ventilschieber (92) angeschlossen ist, über den der Ventilschieber (94) des Schieberventils (90) in seine erste Stellung verstellbar ist.

14. Kühlflüssigkeitskreislauf nach Anspruch 10, dadurch gekennzeichnet, dass die vom Steuerventil (40) zum Sammelbehälter führende Leitung (50) an ein Absperrventil (64) angeschlossen ist, das über einen ersten Pilotdruck und einen weiteren Pilotdruck zusammen mit der Kraft einer Feder (69) zwischen zwei Stellungen verschiebbar ist, in denen die Verbindung der zum Sammelbehälter führenden Leitung (50) mit einer vom Steuerventil (40) zu den Kühlräumen (12, 14) führenden Leitung (52) hergestellt bzw. unterbrochen ist.

15. Kühlflüssigkeitskreislauf nach einem oder mehreren der vorherigen Ansprüche, dadurch gekennzeichnet, dass das Absperrventil (64) mit zwei Piloträumen (65 und 67) versehen ist und der Pilotdruck in den einen Pilotraum (65) über ein weiteres Verzögerungsventil (62) gelangt, das ebenfalls eine Verzögerungskammer (61) aufweist und zwischen zwei Stellungen verschiebbar ist, wobei in jeder Stellung des weiteren Verzögerungsventils (62) der zugehörige Pilotraum (65) mit einem unterschiedlichen Pilotdruck beaufschlagt wird.

16. Kühlflüssigkeitskreislauf nach Anspruch 15, dadurch gekennzeichnet, dass in der einen Stellung des weiteren Verzögerungsventils (62) der zugehörige Pilotraum (65) mit dem Sammelbehälter verbunden ist, während in der anderen Stellung des weiteren Verzögerungsventils (62) in dem zugehörigen Pilotraum (65) ein Druck ansteht, der auch in dem anderen Pilotraum (67) ansteht.

17. Kühlflüssigkeitskreislauf nach Anspruch 16, dadurch gekennzeichnet, dass der in der anderen Stellung des weiteren Verzögerungsventils (62) in den Piloträumen (65 und 67) anstehende Druck dem Druck am weiteren Stellventil (20) entspricht.

18. Kühlflüssigkeitskreislauf nach einem oder mehreren der vorherigen Ansprüche, dadurch gekennzeichnet, dass die Verzögerungskammer (61) des weiteren Verzögerungsventils (62) in Abhängigkeit von der Betätigung der weiteren Kupplung (14) mit dem Sammelbehälter verbindbar ist.

19. Kühlflüssigkeitskreislauf nach einem oder mehreren der vorherigen Ansprüche, dadurch gekennzeichnet, dass die Piloträume (65 und 67) des Absperrventils (64) über je eine Leitung mit dem weiteren Stellventil (20) zum Betätigen der weiteren Kupplung (14) verbunden sind, das über eine weitere Leitung mit der Verzögerungskammer (61) des weiteren Verzögerungsventils (62) in Verbindung steht, wobei in dieser Leitung ein zwischen zwei Stellungen gegen die Wirkung einer Feder verstellbares weiteres Pilotventil (56) vorgesehen ist, dessen Pilotleitung an die weitere Leitung angeschlossen ist und das gegen den Druck in der Pilotleitung über die Feder in seine zweite Stellung verstellbar ist, in der die Verzögerungskammer (61) mit dem Sammelbehälter verbunden ist.

20. Kühlflüssigkeitskreislauf nach einem oder mehreren der vorherigen Ansprüche, dadurch gekennzeichnet, dass in einer den einen Pilotraum (65) mit dem weiteren Stellventil (20) verbindenden Leitung das weitere Verzögerungsventil (62) vorgesehen ist, das bei druckbeaufschlagter Verzögerungskammer (61) den zugehörigen Pilotraum (65) mit dem weiteren Stellventil (20) verbindet und bei mit dem Sammelbehälter verbundener Verzögerungskammer (61) unter der Wirkung einer Feder in eine Stellung verschiebbar ist, in der der zugehörige Pilotraum (65) mit dem Sammelbehälter verbunden ist.

21. Kühlflüssigkeitskreislauf nach einem oder mehreren der vorherigen Ansprüche, dadurch gekennzeichnet, dass zwischen Verzögerungskammer (61) des weiteren Verzögerungsventils (62) und dem weiteren Pilotventil (56) eine weitere Blende (60) und eine die Blende (60) überbrückende Leitung vorgesehen sind.

22. Kühlflüssigkeitskreislauf nach Anspruch 21, dadurch gekennzeichnet, dass zwischen dem weiteren Pilotventil (56) und der weiteren Blende (60) ein weiteres Begrenzungsventil (58) vorgesehen ist, das über dem Druck vor der weiteren Blende (60) gegen die Wirkung einer Feder in eine Sperrstellung verschiebbar ist, wobei die Kraft der Feder grösser ist als die Kraft der Feder am weiteren Verzögerungsventil (38, 78).

**Revendications**

1. Circuit de liquide de refroidissement pour un embrayage à actionnement hydraulique (10) pouvant être embrayé et débrayé par l'intermédiaire d'un organe de manœuvre (18, 19), comportant une source d'alimentation (22) pour du liquide de refroidissement et une conduite reliant la source d'alimentation à la chambre de refroidissement (12, 16) de l'embrayage, comportant une soupape de commande (40, 80) à commande-pilote et par ressort pouvant être déplacé entre deux positions, la chambre de refroidissement (12, 16) étant, dans la première position de la soupape de commande (40, 80) reliée à la source d'alimentation (22), et, dans la seconde position de la soupape de commande (40, 80), la liaison entre la chambre de refroidissement (12, 16) et la source d'alimentation (22) étant interrompue, ou bien l'afflux de fluide de refroidissement étant au moins réduit, caractérisé en ce que la soupape de commande (40, 80) comporte une seconde chambre-pilote (47, 83) et la pression hydraulique de l'embrayage (10) peut être présente dans les deux chambres-pilote (47, 83 et 46, 81), et il est monté, en amont de l'une des chambres-pilote (46, 81), une soupape de retardement (38, 78) qui comporte une chambre de retardement (37, 77) et peut se déplacer entre deux positions, une pression-pilote différente étant, dans chaque position de la soupape de retardement (38, 78), appliquée à la chambre-pilote (46, 81) correspondante.

2. Circuit de liquide de refroidissement selon la revendication 1, caractérisé en ce que, dans l'une des positions de la soupape de retardement (38, 78), la chambre-pilote (46, 81) est reliée au réservoir, tandis que, dans l'autre position de la soupape de retardement (38, 78), il règne dans la chambre-pilote (46, 81) correspondante, une pression qui est également présente dans l'autre chambre-pilote (47, 48).

3. Circuit de liquide de refroidissement selon la revendication 2, caractérisé en ce que la pression présente dans les chambres-pilote (46, 81 et 47, 83) dans l'autre position de la soupape de retardement (38, 78), correspond à la pression systémique.

4. Circuit de liquide de refroidissement selon une ou plusieurs des revendications précédentes, caractérisé en ce que la chambre de retardement (37, 77) de la soupape de retardement (38, 78) peut être reliée à un réservoir en fonction de l'actionnement de l'embrayage (10).

5. Circuit de liquide de refroidissement selon une ou plusieurs des revendications précédentes, caractérisé en ce que les chambres-pilote (46, 47 et 81, 83) de la soupape de commande (40, 80) sont reliées chacune par une conduite à une servo-soupape (18) pour l'actionnement de l'embrayage (10), qui est en liaison, par une conduite, avec la chambre de retardement (37, 77) de la soupape de retardement (38, 78), avec la présence, dans cette conduite, d'une soupape-pilote (32, 72) pouvant être déplacée entre deux positions contre l'action d'un ressort (42), dont la conduite-pilote est reliée à la conduite et qui peut passer, contre la pression régnant dans la conduite-pilote, sous l'action du ressort, dans sa seconde position dans laquelle la chambre de retardement (37, 77) est reliée au réservoir.

6. Circuit de liquide de refroidissement selon une ou plusieurs des revendications précédentes, caractérisé en ce que l'on prévoit dans une conduite reliant une chambre-pilote (46, 81) à la servo-soupape (18) la soupape de retardement (38, 80) qui, lorsque la pression est appliquée à la chambre de retardement (37, 77), relie la chambre-pilot (46, 81) correspondante à la servo-soupape (18) et, lorsque la chambre de retardement (37, 81) est reliée au réservoir, peut passer, sous l'action d'un ressort (48), dans une position dans laquelle la chambre-pilote (46, 81) correspondante est reliée au réservoir.

7. Circuit de liquide de refroidissement selon une ou plusieurs des revendications précédentes, caractérisé en ce qu'un obturateur (36, 76) et une conduite shuntant l'obturateur (36, 76) sont prévus entre la chambre de retardement (37, 77) et la soupape-pilote (32, 72).

8. Circuit de liquide de refroidissement selon la revendication 7, caractérisé en ce qu'il est prévu entre la soupape-pilote (32, 72) et l'obturateur (36, 76) une soupape de limitation (34, 74) qui peut passer contre l'action d'un ressort, sous l'effet de la pression présente avant l'obturateur (36), dans une position d'arrêt, la force du ressort étant supérieure à la force du ressort (48) appliqué à la soupape de retardement (38, 78).

9. Circuit de liquide de refroidissement selon une ou plusieurs des revendications précédentes, caractérisé en ce que, dans l'une des positions de la soupape de commande (80), il existe une liaison de la source d'alimentation (22) avec le réservoir et, par l'intermédiaire d'un obturateur (84), avec une chambre de refroidissement (12) de l'embrayage (10) et, dans l'autre position de la soupape de commande, la liaison entre la source d'alimentation et le réservoir est supprimée.

10. Circuit de liquide de refroidissement selon une ou plusieurs des revendications précédentes, caractérisé en ce que la soupape de commande (40, 80) est reliée à une chambre de refroidissement (16) pour un autre embrayage (14) réalisé éventuellement sous la forme d'un embrayage d'arbre de prise de force.

11. Circuit de liquide de refroidissement selon la revendication 10, caractérisé en ce que, dans la liaison entre la soupape de commande (80) et la chambre de refroidissement (16) pour l'autre embrayage (14), il est prévu une soupape à tiroirs (90) qui comporte au moins une entrée et deux sorties, dont la première est reliée à la soupape de commande (80), la première sortie aux chambres de refroidissement (12, 14) des deux embrayages (10, 14) et la seconde sortie au réservoir, ainsi qu'un tiroir de soupape (94) pouvant se déplacer entre deux positions, qui relie, dans sa première position, la première sortie à la première entrée et obture la seconde sortie, et qui dans sa seconde position, obture la première sortie et relie la première entrée à la seconde sortie.

12. Circuit de liquide de refroidissement selon la revendication 11, caractérisé en ce que le tiroir de soupape (94) peut être amené dans sa seconde position sous l'action d'un ressort (96) et dans sa première position sous l'action de la pression systémique.

13. Circuit de liquide de refroidissement selon la revendication 11, caractérisé en ce qu'il est prévu une autre servo-soupape (20) pour actionner l'autre embrayage (14), qui est reliée à un autre tiroir de soupape (92), par l'intermédiaire duquel le tiroir de soupape (94) de la soupape à tiroirs (90) peut être amené dans sa première position.

14. Circuit de liquide de refroidissement selon la revendication 10, caractérisé en ce que la conduite allant de la soupape de commande (40) au réservoir est raccordée à une soupape d'arrêt (64) qui peut se déplacer, sous l'effet d'une première pression-pilote et d'une autre pression-pilote, conjointement à la force d'un ressort (69), entre deux positions dans lesquelles la liaison de la conduite (50) aboutissant au réservoir avec une conduite (52) allant de la soupape de commande (40) aux chambres de refroidissement (12, 14) est réalisée ou respectivement interrompue.

15. Circuit de liquide de refroidissement selon une ou plusieurs des revendications précédentes, caractérisé en ce que la soupape d'arrêt (64) comporte deux chambres-pilote (65, 67), et la pression-pilote parvient dans l'une des chambres-pilote (65) par l'intermédiaire d'une autre soupape de retardement (62) qui comporte également une chambre de retardement (61) et peut se déplacer entre deux positions, une pression-pilote différente étant, dans chaque position de l'autre soupape de retardement (62) appliquée à la chambre-pilote (65) correspondante.

16. Circuit de liquide de refroidissement selon la revendication 15, caractérisé en ce que, dans l'une des positions de l'autre soupape de retardement (62), la chambre-pilote (65) correspondante est reliée au réservoir, tandis que, dans l'autre position de l'autre soupape de retardement (62), il règne dans la chambre-pilote (65) correspondante une pression qui est également présente dans l'autre chambre-pilote (67).

17. Circuit de liquide de refroidissement selon la revendication 16, caractérisé en ce que la pression régnant, dans l'autre position de l'autre soupape de retardement (62), dans les chambres-pilote (65 et 67) correspond à la pression présente sur l'autre servo-soupape (20).

18. Circuit de liquide de refroidissement selon une ou plusieurs des revendications précédentes, caractérisé en ce que la chambre de retardement (61) de l'autre soupape de retardement (62) peut être reliée au réservoir en fonction de l'actionnement de l'autre embrayage (14).

19. Circuit de liquide de refroidissement selon une ou plusieurs des revendications précédentes, caractérisé en ce que les chambres-pilote (65 et 67) de la soupape d'arrêt (64) sont reliées chacune par une conduite à l'autre servo-soupape (20) destinée à l'actionnement de l'autre embrayage (14), qui est en liaison, par une autre conduite, avec la chambre de retardement (61) de l'autre soupape de retardement (62), avec la présence, dans cette conduite, d'une autre soupape-pilote (56) pouvant se déplacer entre deux positions contre l'action d'un ressort, dont la conduite-pilote est reliée à l'autre conduite et qui peut passer, contre la pression régnant dans la conduite-pilote, sous l'action d'un ressort, dans sa seconde position dans laquelle la chambre de retardement (61) est reliée au réservoir.

20. Circuit de liquide de refroidissement selon une ou plusieurs des revendications précédentes, caractérisé en ce qu'il est prévu dans une conduite reliant l'une des chambres-pilote (65) à l'autre servo-soupape (20), l'autre soupape de retardement (62) qui, lorsqu la pression est appliquée à la chambre de retardement (61), relie la chambre-pilote (65) correspondante à l'autre servo-soupape (20) et, lorsque la chambre de retardement (61) est reliée au réservoir, peut passer, sous l'action d'un ressort, dans une position dans laquelle la chambre-pilote (65) correspondante est reliée au réservoir.

21. Circuit de liquide de refroidissement selon une ou plusieurs des revendications précédentes, caractérisé en ce qu'un autre obturateur (60) et une conduite shuntant l'obturateur (60) sont prévus entre la chambre de retardement (61) de l'autre soupape de retardement (62) et l'autre soupape-pilote (56).

22. Circuit de liquide de refroidissement selon la revendication 21, caractérisé en ce qu'il est prévu, entre l'autre soupape-pilote (56) et l'autre obturateur (60), une autre soupape de limitation (58) qui peut passer, sous l'effet de la pression présente avant l'autre obturateur (60), contre l'action d'un ressort, dans une position d'arrêt, la force du ressort étant supérieure à la force du ressort appliqué à l'autre soupape de retardement (38, 78).

**Claims**

1. Cooling fluid circuit for a hydraulically operated clutch (10) engageable and disengageable through the medium of an actuating unit (18, 19), with a power source (22) for cooling fluid and a pipe connecting the power source to the cooling chamber (12, 16) of the clutch and having a pilot- and spring-controlled control valve (40, 80) adjustable between two positions, the cooling chamber (12, 16) being connected to the power source (22) in the first position of the control valve (40, 80) and the connection between the cooling chamber (12, 16) and the power source (22) being interrupted or the supply of coolant being at least reduced in the second position of the control valve (40, 80), characterised in that the control valve (40, 80) has a second pilot chamber (47, 83) and the hydraulic pressure of the clutch (10) can obtain at both pilot chambers (47, 83 and 46, 81), and at the inlet side of one pilot chamber (46, 81) there is connected a delay valve (38, 78) having a delay chamber (37, 77) and movable between two positions, a different pilot pressure being admitted to the associated pilot chamber (46, 81) in each position of the delay valve (38, 78).

2. Cooling fluid circuit according to Claim 1, characterised in that in one position of the delay valve (38, 78), the associated pilot chamber (46, 81) is connected to the storage tank, while in the other position of the delay valve (38, 78) there is present in the associated pilot chamber (46, 81) a pressure which is also present in the other pilot chamber (47, 48) (sic).

3. Cooling fluid circuit according to Claim 2, characterised in that the pressure present in the pilot chambers (46, 81 and 47, 83) in the other position of the delay valve (38, 78) corresponds to the system pressure.

4. Cooling fluid circuit according to one or more of the preceding Claims, characterised in that the delay chamber (37, 77) of the delay valve (38, 78) can be connected to a storage tank in dependence upon the actuation of the clutch (10.).

5. Cooling fluid circuit according to one or more of the preceding Claims, characterised in that the pilot chambers (46, 47 and 81, 83) of the control valve (40, 80) are each connected through a separate pipe to a regulating valve (18) for actuating the clutch (10) and in communication through a pipe with the delay chamber (37, 77) of the delay valve (38, 78), there being provided in this pipe a pilot valve (32, 72) shiftable between two positions in opposition to the action of a spring (42), whose pilot pipe is connected to the pipe, and shiftable through the spring in opposition to the pressure in the pilot pipe into its second position, in which the delay chamber (37, 77) is connected to the storage tank.

6. Cooling fluid circuit according to one or more of the preceding Claims, characterised in that the delay valve (38, 80 (sic) ) is provided in a pipe connecting the one pilot chamber (46, 81) to the regulating valve (18), and when pressure is admitted to the delay chamber (37, 77), the delay valve connects the associated pilot chamber (46, 81) to the regulating valve (18), while when the delay chamber (37, 81 (sic) ) is connected to the storage tank, the delay valve is shiftable under the action of a spring (48) into a position in which the associated pilot chamber (46, 81) is connected to the storage tank.

7. Cooling fluid circuit according to one or more of the preceding Claims, characterised in that a diaphragm (36, 76) and a pipe by-passing the diaphragm (36, 76) are provided between the delay chamber (37, 77) and the pilot valve (32, 72).

8. Cooling fluid circuit according to Claim 7, characterised in that between the pilot valve (32, 72) and the diaphragm (36, 76) there is provided a limiting valve (34, 74) which is shiftable into a blocking position through the pressure in advance of the diaphragm (36) in opposition to the action of a spring, the force of the spring being greater than the force of the spring (48) at the delay valve (38, 78).

9. Cooling fluid circuit according to one or more of the preceding Claims, characterised in that in one position of the control valve (80) a connection exists between the power source (22) and the storage tank and, via a diaphragm (84), a cooling chamber (12) of the clutch (10), and in the other position of the control valve the connection of the power source to the storage tank is prevented.

10. Cooling fluid circuit according to one or more of the preceding Claims, characterised in that the control valve (40, 80) is connected to a cooling chamber (16) for another clutch (14) in the form if need be of a power take-off clutch.

11. Cooling fluid circuit according to Claim 10, characterised in that in the connection between the control valve (80) and the cooling chamber (16) for the further clutch (14) there is provided a slide valve (90) having at least one inlet and two outlets, of which the first inlet is connected to the control valve (80), the first outlet to the cooling chambers (12, 14) (sic) of both clutches (10, 14) and the second outlet to the storage tank, and also a slide (94) movable between two positions which connects the first outlet to the first inlet and blocks the second outlet in its first position and blocks the first outlet and connects the first inlet to the second outlet in its second position.

12. Cooling fluid circuit according to Claim 11, characterised in that the valve slide (94) is shiftable into its second position through the medium of a spring (96) and into its first position through the medium of the system pressure.

13. Cooling fluid circuit according to Claim 11, characterised in that another regulating valve (20) for actuating the further clutch (14) is provided which is connected to another valve slide (92) through the medium of which the slide (94) of the slide valve (90) can be shifted into its first position.

14. Cooling fluid circuit according to Claim 10, characterised in that the pipe (50) leading from the control valve (40) to the storage tank is connected to a shut-off valve (64) which is shiftable through a first pilot pressure and another pilot pressure together with the force of a spring (69) between two positions, in which the connection of the pipe (50) leading to the storage tank to a pipe (52) leading from the control valve (40) to the cooling chambers (12, 14 (sic) ) is established or interrupted.

15. Cooling fluid circuit according to one or more of the preceding Claims, characterised in that the shut-off valve (64) is provided with two pilot chambers (65 and 67) and the pilot pressure reaches one pilot chamber (65) by way of another delay valve (62) which likewise has a delay chamber (61) and is shiftable between two positions, a different pilot pressure being admitted to the associated pilot chamber (65) in each position of the additional delay valve (62).

16. Cooling fluid circuit according to Claim 15, characterised in that in one position of the additional delay valve (62) the associated pilot chamber (65) is connected to the storage tank, while in the other position of the additional delay valve (62) a pressure is present in the associated pilot chamber (65) which is also present in the other pilot chamber (67).

17. Cooling fluid circuit according to Claim 16, characterised in that the pressure present in the pilot chambers (65 and 67) in the other position of the additional delay valve (62) corresponds to the pressure at the additional regulating valve (20).

18. Cooling fluid circuit according to one or more of the preceding Claims, characterised in that the delay chamber (61) of the additional delay valve (62) can be connected to the storage tank in dependence upon the actuation of the additional clutch (14).

19. Cooling fluid circuit according to one or more of the preceding Claims, characterised in that the pilot chambers (65 and 67) of the shut-off valve (64) are each connected through a separate pipe to the additional regulating valve (20) for actuating the additional clutch (14) and in communication through an additional pipe with the delay chamber (61) of the additional delay valve (62), there being provided in this pipe an additional pilot valve (56) shiftable between two positions in opposition to the action of a spring, whose pilot pipe is connected to the additional pipe, and shiftable through the spring in opposition to the pressure in the pilot pipe into its second position, in which the delay chamber (61) is connected to the storage tank.

20. Cooling fluid circuit according to one or more of the preceding Claims, characterised in that the additional delay valve (62) is provided in a pipe connecting the one pilot chamber (65) to the additional regulating valve (20), and when pressure is admitted to the delay chamber (61), the delay valve connects the associated pilot chamber (65) to the additional regulating valve (20), while when the delay chamber (61) is connected to the storage tank, the delay valve is shiftable under the action of a spring into a position in which the associated pilot chamber (65) is connected to the storage tank.

21. Cooling fluid circuit according to one or more of the preceding Claims, characterised in that an additional diaphragm (60) and a pipe by-passing the diaphragm (60) are provided between the delay chamber (61) of the additional delay valve (62) and the additional pilot valve (56).

22. Cooling fluid circuit according to Claim 21, characterised in that between the additional pilot valve (56) and the additional diaphragm (60) there is provided an additional limiting valve (58) which is shiftable into a blocking position through the pressure in advance of the additional diaphragm (60) in opposition to the action of a spring, the force of the spring being greater than the force of the spring at the additional delay valve (38, 78 (sic) ).

1 / 2

**Fig. 1**

## Fig. 2